# EUROPÄISCHE PATENTSCHRIFT

(11) **EP 2 910 421 B1**
(45) Veröffentlichungstag und Bekanntmachung des Hinweises auf die Patenterteilung: **03.04.2019**
(21) Anmeldenummer: 15155197.5
(22) Anmeldetag: 16.02.2015
(51) Int. Cl.: B60P 7/13

(54) **Verriegelungsvorrichtung**
Locking device
Dispositif de verrouillage

(30) Priorität: 19.02.2014 DE 102014002310
(43) Veröffentlichungstag der Anmeldung: 26.08.2015
(73) Patentinhaber: Container Quick Lock NV, 2030 Antwerpen (BE)
(72) Erfinder: Benschop, Leendert Johannes Marinus, 3413 ND Jaarsveld (NL)
(74) Vertreter: V.O.

(56) Entgegenhaltungen:
- WO-A1-2014/000732
- WO-A2-2007/142531
- DE-A1- 10 202 190
- GB-A- 1 494 729
- US-A- 4 352 613

## Beschreibung

Die vorliegende Erfindung betrifft eine Verriegelungsvorrichtung zur Verriegelung eines, insbesondere nach ISO standardisierten Eckbeschlages eines Frachtcontainers, umfassend ein Verriegelungsmittel, das mittels eines Betätigungsmittels zwischen einer geöffneten Stellung, in der es ungehindert entlang einer Einführachse A_{E} eine Öffnung des Eckbeschlages passieren kann, und einer geschlossenen Stellung, in der es sich relativ zu dieser Öffnung arretiert und insbesondere hinter einer die Öffnung wenigstens teilweise umgebenden Wand verhakt, verlagerbar ist, und ein Gehäuse, wobei das Betätigungsmittel wenigstens ein manuell betätigbares Hebelelement umfasst.

Darüber hinaus betrifft die Erfindung ein Fahrzeug oder einen dergleichen Befestigungsort für einen Container, wobei wenigstens eine Verriegelungsvorrichtung der vorgenannten Art vorgesehen ist.

Unter Gehäuse wird im Zuge der Erfindung jegliches Element verstanden, das einer Lagerung, Aufnahme oder örtlichen Zuordnung des Verriegelungsmittel und des Betätigungsmittels dient. Ein solches Gehäuse kann unter anderem aus einem oder mehreren Rahmenelementen oder einem oder mehreren Plattenelementen oder deren Kombination bestehen. Vorzugsweise ist die Verriegelungsvorrichtung über ein solches Gehäuse am Fahrzeug oder dergleichen Befestigungsort für einen Container montierbar bzw. anordbar angebracht. Ein solches Fahrzeug kann beispielsweise ein LKW sein, es können aber auch Transportschiffe, Eisenbahnwaggons, aber auch Lagerorte sein, bei denen eine fixierte Befestigung eines Containers und insbesondere eines Frachtcontainers sein.

Ein solcher Frachtcontainer hat vorzugsweise nach ISO-Norm standardisierte Eckbeschläge, die mit der Verriegelungsvorrichtung und insbesondere mit deren Verriegelungsmittel in Kraftkopplung treten können, um eine Befestigung des Containers sicherzustellen.

Wenn von einem solchen nach ISO standardisierten Eckbeschlag, im Englischen als Corner-Casting bezeichnet, die Rede ist, wird im Umfang der Erfindung ein nach ISO-Norm 1161 definierter Eckbeschlag verstanden. ISO-Norm 1161 wurde unter dem Titel "ISO-Container der Reihe 1 - Eckbeschläge-Anforderungen" 06.09.1990 durch die International Standardisation Organisation in Genf, Schweiz veröffentlicht.

Aus dem Stand der Technik sind obige Verriegelungsvorrichtungen meist als sogenannte "Twistlocks" bekannt. Twistlocks sind, wie der englische Name Twist für "verdrehen" zusteht, verdrehen, die Container oder dergleichen Wechselbehälter untereinander und/oder mit einem Trägerfahrzeug verbinden. Dabei werden die Twistlocks in die Eckbeschläge und vorzugsweise in die nach ISO genormten Eckbeschläge der Container eingesetzt bzw. die Container auf dem fest am Fahrzeug befindlichen Verriegelungsvorrichtungen aufgesetzt.

Durch das Drehen eines Verriegelungselements des Twistlocks um üblicherweise 90° wird dann eine formschlüssige Verbindung hergestellt. Aus dem Stand der Technik sind unterschiedliche Verschlussvorrichtungen der Twistlocks bekannt, nachteilig ist jedoch ein Verriegeln von Containern, die beispielsweise aufgrund von Unfällen oder aufgrund ihres Alters sehr große Paßtoleranzen aufweisen. Hier kommt es mitunter nicht zu einer sicheren Verriegelung des Eckbeschlages durch das Twistlock.

Darüber hinaus ist insbesondere bei der Witterung ausgesetzten Verriegelungsvorrichtungen mitunter eine sehr hohe Betätigungskraft nötig, um die Twistlocks zu verriegeln bzw. zu entriegeln. Darüber hinaus ist es insbesondere im Transportgewerbe gewünscht, eine Verriegelung für Eckbeschläge von Containern bereitzustellen, die auch bei hohen Paßtoleranzen ein einfaches und sicheres Einführen der Verriegelungsvorrichtung in oder an den Eckbeschlag bzw. in eine Verriegelungsstellung erlauben. Selbiges gilt natürlich auch für den Entriegelungsvorgang, der sicher und insbesondere wiederholbar ausführbar sein muss.

Ein weiterer Nachteil der aus dem Stand der Technik bekannten Verriegelungsvorrichtungen ist deren limitierte Minimalbauteilhöhe. So ist es aufgrund der Konzeptionierung der bekannten Twistlocks nicht möglich, die Bauteilhöhe der Verriegelungsvorrichtung über ein bestimmtes Mindestmaß weiter abzusenken. Diese Reduzierung der Bauteilhöhe ist jedoch bei sehr vielen Anwendungsgebieten der Verriegelungsvorrichtung von Vorteil. Dies gilt insbesondere für Fahrzeuge, bei denen die Verriegelungsvorrichtungen lösbar und insbesondere verschwenkbar angeordnet sind. Hier können die Verriegelungsvorrichtungen bei Bedarf in eine Aufnahmestellung, in der sie für die Verriegelung eines Containers bereitstehen, gebracht werden, oder, sollte keine Verriegelung benötigt werden, entfernt werden.

Aus der WO 2007/142531 A2 ist eine Verriegelungsvorrichtung zur Verriegelung eines Eckbeschlages eines Frachtcontainers bekannt, bei dem ein Verriegelungsmittel umfassend zwei Verriegelungsarme von einer geschlossenen Stellung in eine geöffnete Stellung und umgekehrt bewegt werden kann. Die Bewegung wird durch ein Betätigungsmittel initiiert, das in Form eines Druckvorsatzes von dem Eckcontainer, der auf die Verriegelungsvorrichtung gesetzt wird, ausgelöst wird. Eine manuelle Betätigung und insbesondere eine manuelle Kontrolle der Verriegelungsvorrichtung ist jedoch nicht möglich. Darüber hinaus erfordert die Aktivierung der Verriegelungsvorrichtung durch einen aufgesetzten Frachtcontainer eine sehr komplexe Bauweise der Verriegelungsvorrichtung.

Aus der WO 2014/000732 A1 ist ebenfalls eine Verriegelungsvorrichtung bekannt, bei der eine aus dem Stand der Technik bekannte Twist-Lock-Vorrichtung mittels einer verdrehbaren Lagerungshülse von einer versenkten in eine hervorstehende Position bewegt werden kann und wieder zurück. In der vorstehenden Position erlaubt die Twist-Lock-Verriegelungsanordnung dann ein Verriegeln eines Eckbeschlages eines Frachtcontainers. Auch hier ist jedoch die Verriegelung von der automatischen Aktivierung der Twist-Lock-Verriegelungsvorrichtung abhängig. Darüber hinaus erfordert eine solche Vorrichtung eine sehr hohe Bauteilhöhe.

Aufgabe der vorliegenden Erfindung ist es folglich, eine Verriegelungsvorrichtung bereitzustellen, die bei geringer Bauteilhöhe eine zuverlässige Verriegelung eines Frachtcontainers der dergleichen bei einfacher Bauweise ermöglicht.

Diese Aufgabe wird durch eine Verriegelungsvorrichtung gemäß Patentanspruch 1 und ein Fahrzeug gemäß Patentanspruch 14 gelöst.

Vorzugsweise wir diese Aufgabe gelöst durch eine Verriegelungsvorrichtung zur Verriegelung eines, insbesondere nach ISO standardisierten, Eckbeschlages eines Frachtcontainers, umfassend ein Verriegelungsmittel, das mittels eines Betätigungsmittels zwischen einer geöffneten Stellung, in der es unbehindert entlang einer Einführachse A_{E} eine Öffnung des Eckbeschlages passieren kann, und einer geschlossenen Stellung, in der es sich relativ zu dieser Öffnung arretiert und insbesondere hinter einer die Öffnung wenigstens teilweise umgebenden Wand verhakt, verlagerbar ist, und ein Gehäuse, wobei das Betätigungsmittel wenigstens ein manuell betätigbares Hebelelement umfasst, wobei das Verriegelungsmittel und das Betätigungsmittel derart am Gehäuse gelagert sind, dass das Betätigungsmittel bei einer manuellen Schließbetätigung über eine unmittelbare Interaktion mit dem Gehäuse mittelbar eine Verlagerung des Verriegelungsmittels von der geöffneten Stellung in die geschlossene Stellung bewirkt und unmittelbar eine Translation und mittelbar eine Rotation des Verriegelungsmittels von der geöffneten Stellung in die geschlossene Stellung bewirkt, wobei das Verriegelungsmittel wenigstens ein Kipphebelelement oder dergleichen Rotationsaktuator derart umfasst, dass es bei einer Translation in eine Rotation gedrängt wird.

Darüber hinaus wird diese Aufgabe gelöst durch ein Fahrzeug oder dergleichen Befestigungsort für einen Container, wobei wenigstens eine solche Verriegelungsvorrichtung vorgesehen ist.

Im Folgenden wir für das oben genannte Gegenlager der Begriff Gehäuse verwendet. Es sei jedoch erwähnt, dass anstelle einer Interaktion mit dem Gehäuse stets auch immer eine Interaktion mit einem entsprechenden Gegenlager ausgeführt werden kann, außer es ist dies anderweitig erwähnt. Eine Spezifizierung der Interaktion mit dem Gehäuse ist jedoch eine bevorzugte Ausführungsform. Ein solches Gegenlager kann beispielsweise ein Frachtcontainer sein, der auf dem Gehäuse gelagert ist und der dann mit dem Betätigungsmittel in Interaktion tritt. Hierfür ist dann vorzugsweise im Gehäuse eine entsprechende Aussparung vorgesehen.

Ein wesentlicher Punkt der Erfindung ist die Anordnung des Betätigungsmittels derart, dass es bei einer Schließbetätigung über eine unmittelbare Interaktion mit einem Gegenlager und insbesondere dem Gehäuse mittelbar eine Verlagerung des Verriegelungsmittels von der geöffneten Stellung in die geschlossene Stellung bewirkt. Vorzugsweise ist also ein Zwischenelement vorgesehen, das resultierend aus der Interaktion zwischen Betätigungselement und dem Gegenlagerelement bzw. dem Gehäuse das Verriegelungsmittel von der geöffneten Stellung in die geschlossene Stellung bewegt. Gerade diese Kopplung zwischen unmittelbarer und mittelbarer Interaktion bzw. Verlagerung bewirkt, dass Bauteiltoleranzen sehr einfach und zuverlässig kompensiert werden können. Darüber hinaus ist eine Kraftrichtungsumleitung, beispielsweise von einer Vertikalraft in eine Rotations- bzw. Momentenkraft sehr einfach möglich.

Im Umfang der Erfindung wird unter unmittelbarer Interaktion vorzugsweise eine direkte körperliche Kraftkopplung zwischen zwei Elementen und hier insbesondere zwischen dem Betätigungsmittel und dem Gehäuse bzw. dem Gegenlager verstanden. Im

Gegenzug wird unter einer mittelbaren Interaktion bzw. einer mittelbaren Verlagerung eine indirekte Kopplung verstanden, wobei vorzugsweise ein weiteres vorzugsweise zwischengelagertes oder gekoppeltes Element die resultierende mittelbare Interaktion bzw. Verlagerung ausführt.

Unter den Begriffen Verriegelungsmittel und Betätigungsmittel sind hier jeweils ein oder mehrere Elemente bzw. eine Anordnung von Elementen zu verstehen, die unter dem jeweiligen Mittel zusammengefasst sind.

Erfindungsgemäß sind das Verriegelungsmittel und das Betätigungsmittel derart gelagert, dass das Betätigungsmittel bei einer Schließbetätigung über die unmittelbare Interaktion mit dem Gegenlager bzw. Gehäuse unmittelbar eine Translation und mittelbar eine Rotation des Verriegelungsmittels von der geöffneten Stellung in die geschlossene Stellung bewirkt. Das bedeutet vorzugsweise, dass das Betätigungsmittel derart mit dem Verriegelungsmittel gekoppelt ist, dass es das Verriegelungsmittel in eine bestimmte Richtung verschiebt, woraus dann eine Rotation des Verriegelungsmittels und insbesondere eine Rotation von der geöffneten Stellung in die geschlossene Stellung resultieren. Vorzugsweise erfolgt die Translation in Richtung der Einführachse A_{E}.

Dabei umfasst das Verriegelungsmittel wenigstens ein Kipphebelelement oder ein dergleichen Rotationsaktuator derart, dass es bei einer Translation in eine Rotation gedrängt wird, wobei vorzugsweise das Kipphebelelement des Verriegelungsmittels mit einem Gegenlagerelement am Gehäuse in Kraftkopplung steht. Ein solches Kipphebelelement ist im Prinzip aus dem Stand der Technik bekannt, es erlaubt insbesondere die Wandlung einer Rotation in eine translatorische Bewegung, also rotatorische Bewegung in eine translatorische Bewegung oder umgekehrt. Hier ist das Kipphebelelement am Verriegelungsmittel angeordnet und zwar derart, dass bei einer Translation des Verriegelungsmittels eine Rotation resultiert, die auf das Verriegelungsmittel wirkt. Ist, wie im Folgenden näher beschrieben, das Verriegelungsmittel beispielsweise ein Verriegelungsarm, wird dieser Verriegelungsarm also bei einer translatorische Bewegung, verursacht durch das Betätigungselement, nicht nur verschoben, sondern auch rotiert. In Eingriffsstellung mit dem obigen Eckbeschlag eines Containers kommt es auf diese Weise sowohl zu einer Einhakung (eine Rotationslagerung zwischen Lagerelement und Betätigungsmittel und/oder zwischen Lagerelement und Verriegelungsmittel anordbar). Für eine solche Lagerung kann beispielsweise ein Rotationslager, wie es aus dem Stand der Technik bekannt ist, verwendet werden.

Vorzugsweise umfasst das Betätigungsmittel wenigstens ein verschwenkbar gelagertes Hebelelement. Dieses Hebelelement ragt vorzugsweise derart aus dem Gehäuse hervor, dass es von außen klar sichtbar und insbesondere seine Position relativ zum Gehäuse und/oder relativ zum Verriegelungsmittel klar ersichtlich ist. Auf diese Weise ist optisch der Verriegelungszustand der Verriegelungsvorrichtung eindeutig identifizierbar. Das Betätigungsmittel umfasst vorzugsweise wenigstens ein Griff- oder dergleichen Element, das an dem wenigstens einen Hebelelement ausgebildet ist.

Das Betätigungsmittel umfasst vorzugsweise wenigstens ein Kipphebelelement oder dergleichen Rotationsaktuator derart, dass es bei einer Rotation in eine Translation gedrängt wird. Ein solches Kipphebelelement oder ein dergleichen Rotationsaktuator kann beispielsweise am Betätigungsmittel vorgesehen sein und derart mit einem Gegenlagerelement am Gehäuse in Kraftkopplung stehen, dass durch eine Rotation des Betätigungshebels bzw. eines entsprechend ausgeführtes Betätigungsmittels eine Translation desselben insbesondere in einer Achse parallel zur Einführachse A_{E} erfolgt. Ist beispielsweise das Betätigungsmittel bzw. ein entsprechend ausgebildeter Betätigungshebel über das gemeinsame Lagerelement verschiebbar am Gehäuse gelagert, kann durch die Interaktion zwischen dem Kipphebelelement und dem Gehäuse die rotatorische Bewegung in eine translatorische Bewegung umgesetzt werden. Durch die Kopplung zwischen Betätigungsmittel und Verriegelungsmittel erfolgt so auch eine Translation des Verriegelungsmittels, die dann, bei entsprechender Ausführung des Verriegelungsmittels wie es zuvor beschrieben wurde, in dessen Rotation und somit einer Verriegelung der Verriegelungsvorrichtung am Eckbeschlag resultiert.

Vorzugsweise ist das Gegenlagerelement des Betätigungsmittels so ausgebildet, dass es einstückig mit dem Gehäuse uns insbesondere als Innenseite einer Gehäusewand bzw. eines Gehäuseelementes ausgebildet ist. Selbiges gilt auch für ein Gegenlagerelement des Verriegelungsmittels; auch dieses kann eigenständig und insbesondere lösbar, aber auch einstückig mit dem Gehäuse oder am Gehäuse angeordnet sein, insbesondere an einem Gehäuseelement bzw. einer Gehäusewand.

Vorzugsweise umfasst das Verriegelungsmittel wenigstens einen verschwenkbar gelagerten Verriegelungsarm, der wenigstens einen Verriegelungsfortsatz derart aufweist, dass er sich in der geschlossenen Stellung hinter der die Öffnung wenigstens teilweise umgebenden Wand verhakt. Ein solcher Verriegelungsarm kann einen oder mehrere Verriegelungsfortsätze aufweisen, die vorzugsweise so ausgebildet sind, dass sie eine sichere Festlegung am Eckbeschlag erlauben.

Vorzugsweise sind wenigstens zwei Verriegelungsarme des Verriegelungsmittels vorgesehen und vorzugsweise gegenläufig bewegbar, vorzugsweise verschwenkbar auf dem gemeinsamen Lagerelement gelagert. Das bedeutet, dass bei einer Translation des Lagerelementes ein gegenläufiges Verlagern bzw. Verschwenken der Verriegelungsarme resultiert. Es ist auch möglich, dass die Verriegelungsarme in eine gemeinsame oder von einander abweichende aber nicht gegenläufige Richtungen bewegbar und insbesondere verschwenkbar sind.

Im Besonderen ist vorzugsweise vorgesehen, dass wenigstens zwei Verriegelungsarme des Verriegelungsmittels als Scherenmechanismus angeordnet und insbesondere im Kreuzungspunkt der Verriegelungsarme auf dem gemeinsamen Lagerelement gelagert sind.

Vorzugsweise sind an dem Verriegelungsarm am einen freien Ende wenigstens ein Verriegelungsfortsatz und am gegenüberliegenden anderen freien Ende ein Kipphebelelement oder dergleichen zuvor beschriebenen Rotationsaktuator angeordnet.

Vorzugsweise sind bei einem einen Scherenmechanismus aufweisenden Verriegelungsmittel die Abschnitte zwischen dem gemeinsamen Lagerelement und dem Ende, das die Verriegelungsfortsätze aufweist, länger als die Abschnitte zwischen dem gemeinsamen Lagerelement und dem anderen freien Ende und vorzugsweise dem freien Ende, das das Kipphebelelement aufweist.

Vorzugsweise umfasst das Verriegelungsmittel ein Vorspannmittel, das das Verriegelungsmittel und insbesondere dessen Verriegelungselement in die geöffnete Stellung drängt bzw. vorspannt. Ein solches Vorspannmittel kann beispielsweise ein Federelement und insbesondere eine Zugfeder sein, oder ein dergleichen Kraftelement das derart am Verriegelungsmittel angeordnet ist, dass es in der geschlossenen Stellung der Verriegelungsvorrichtung vorgespannt und insbesondere gedehnt wird und somit eine Vorspannung in Richtung der geöffneten Stellung aufbringt. Auch ist es möglich, das Vorspannmittel als Rotationsfeder oder dergleichen Federelement auszubilden. Anstelle einer Zugfeder ist natürlich auch die Verwendung einer Druckfeder oder eines dergleichen Kraftelementes möglich. Das Vorspannmittel bildet vorzugsweise zwischen dem Verriegelungsmittel und dem Gehäuse eine Kraftkopplung. Es auch möglich über das Vorspannmittel eine Kraftkopplung zwischen den zwei Verriegelungsarmen zu bilden bzw. eine Kraftkopplung zwischen wenigstens zwei Elementen des Verriegelungsmittels zu bilden.

Vorzugsweise umfasst die Verriegelungsvorrichtung ein Sicherungsmittel, das das Verriegelungsmittel lösbar in der geschlossenen Position fixiert. Ein solches Sicherungsmittel sichert die Verriegelungsvorrichtung gegen das ungewollte Öffnen insbesondere im Verriegelungszustand. Ein solches Sicherungsmittel kann beispielsweise ein Hebel oder Bolzenelement sein, das mit dem Verriegelungsmittel in der geschlossenen Stellung in eine arretierende Rastverbindung tritt. Beispielsweise ist die Verriegelungsvorrichtung ein Schwenkhebel, der der Feder vorgespannt mit dem Bestätigungsmittel in Kraftkopplung steht und bei Erreichen der geschlossenen Stellung des Verriegelungsmittels arretierend am Betätigungsmittel eingreift. Dieser Arretierungseingriff ist vorzugsweise gegen die Einwirkung des Federelementes lösbar ausgebildet, wobei nach Lösen des Arretierungseingriffs das Betätigungsmittel wieder in die geöffnete Stellung bewegt werden kann. Vorzugsweise ist das Verriegelungsmittel ein drehgelagerter Schwenkhebel, der eine Verriegelungsraste aufweist, die mit einer Verriegelungsgegenraste am Betätigungsmittel in lösbarem Kopplungseingriff bringbar ist, oder umgekehrt. Vorzugsweise ragt ein Verriegelungsbetätigungsfortsatz des Sicherungsmittels derart aus dem Gehäuse hervor, dass er von der Außenseite des Gehäuses optisch erkennbar und/oder betätigbar ist.

Das Sicherungsmittel wirkt vorzugsweise direkt auf das Betätigungsmittel ein. Darüber hinaus ist es aber auch möglich, das Sicherungsmittel so auszubilden, dass es auf die Verriegelungsvorrichtung einwirkt.

Vorzugsweise ist die Verriegelungsvorrichtung mit Kompensationsmitteln versehen, um unterschiedliche Dicken beispielsweise der Wand von Eckbeschlägen, die mit der Verriegelungsvorrichtung kooperieren, auszugleichen. Im Ergebnis wird dadurch die Toleranz zwischen der Verriegelungsvorrichtung und dem Eckbeschlag eines Containers erhöht, so dass unterschiedliche Container verriegelt werden können, auch wenn sie nicht den strengen ISO Norm-Vorgaben entsprechen. Ein solches Kompensationsmittel kann beispielsweise eine elastische Auflage oder ein dergleichen elastisches Element zwischen dem Gehäuse und dem Eckbeschlag sein. Es kann als verformbares Element, als Federelement, als elastisches Kissen oder als ein auf jegliche andere Art kompensierendes Bauteil hergestellt sein.

Vorzugsweise ist die Verriegelungsvorrichtung insbesondere lösbar an einem Fahrzeug oder dergleichen Befestigungsort für einen Container befestigbar. Diese Befestigung erfolgt vorzugsweise über das Gehäuse, das an dem Fahrzeug oder dem dergleichen Befestigungsort festlegbar, verschwenkbar oder dergleichen angeordnet ist.

Die Erfindung betrifft, wie bereits erwähnt, auch ein Fahrzeug oder dergleichen Befestigungsort für einen Container, wobei wenigstens eine Verriegelungsvorrichtung gemäß den vorgenannten Ausführungen vorgesehen ist. Insofern wird auf die vorgenannten Passagen verwiesen.

Weiter Ausführungsformen der Erfindung ergeben sich aus den Unteransprüchen.

Im Folgenden wird die Erfindung anhand eines Ausführungsbeispiels beschrieben, das durch die beiliegenden Zeichnungen näher erläutert wird.

Hierbei zeigen schematisch:
- Fig. 1, 3 und 5:: unterschiedliche Querschnitte durch eine Ausführungsform der Verriegelungsvorrichtung in geöffneter Stellung;
- Fig. 2, 4 und 6:: dieselben Querschnitte der Verriegelungsvorrichtung gemäß den Figuren 1, 3 und 5 jedoch in geschlossener Stellung;
- Fig. 7:: eine isometrische Darstellung der Ausführungsform der Verriegelungsvorrichtung gemäß Fig. 1;
- Fig. 8 und 9:: isometrische Darstellungen der Ausführungsform gemäß Fig. 7 ohne Gehäuse;
- Fig. 10 bis 12:: unterschiedliche Seitenansichten der Ausführungsform gemäß Fig. 1 mit und ohne Gehäuse bzw. Leitelement.

Im Folgenden werden für gleiche und gleich wirkende Bauteile dieselben Bezugsziffern verwendet, wobei zur Unterscheidung bisweilen Hochindizes ihre Anwendung finden.

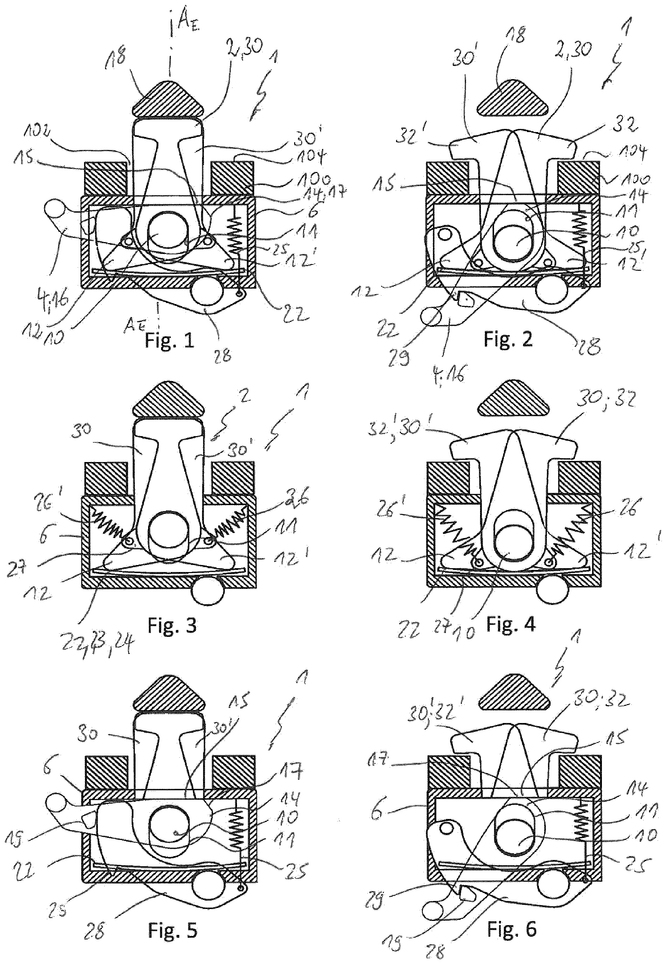

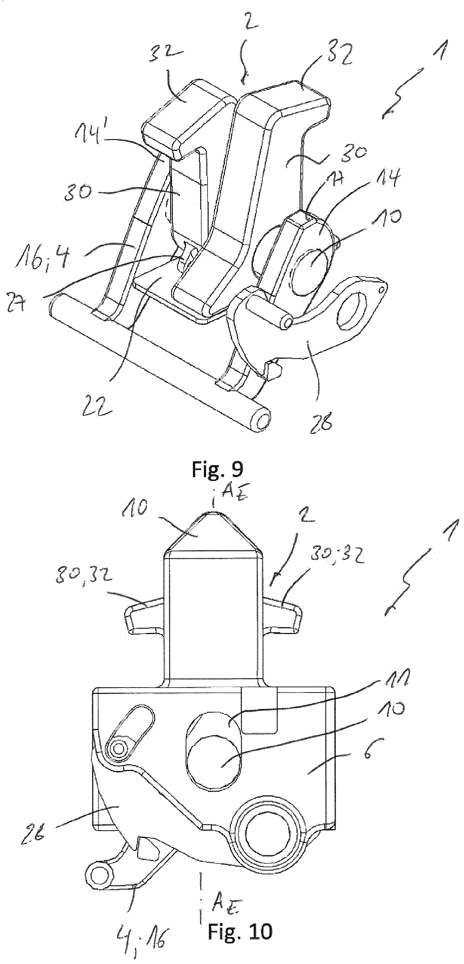

Die Figuren 1 bis 12 zeigen eine Ausführungsform der Verriegelungsvorrichtung in unterschiedlichen Darstellungsformen, Zusammenbaustadien und Öffnungs- bzw. Schließstellungen. Die verwendeten Bauteile sind jedoch identisch, so dass die folgenden Passagen sich auf alle Figuren beziehen. Es sei darauf hingewiesen, dass in den hier beiliegenden Zeichnungen und insbesondere in den Fig. 1 bis 6 die unterschiedlichen Bauteile der Verriegelungsvorrichtung als Strichzeichnungen und nicht opak dargestellt sind. Das hat zur Folge, dass übereinander gelagerte Bauteile allesamt nahezu vollständig dargestellt sind.

Um einen ersten Überblick über die hier dargestellte Ausführungsform der erfindungsgemäßen Verriegelungsvorrichtung zu erlangen, wird im Besonderen auf die Figuren 1, 2, 7 und 8 verwiesen.

Die erfindungsgemäße Verriegelungsvorrichtung 1 zur Verriegelung eines insbesondere nach ISO standardisierten Eckbeschlages 100, der hier lediglich schematisch dargestellt ist, umfasst ein Verriegelungsmittel 2, das mittels eines Betätigungsmittels 4 zwischen einer geöffneten Stellung (siehe insbesondere Fig. 1), in der es ungehindert entlang einer Einführachse A_{E} einer Öffnung 102 des Eckbeschlages 100 passieren kann, und einer geschlossenen Stellung (siehe insbesondere Fig. 2), in der es sich hinter einer die Öffnung 102 wenigstens teilweise umgebenden Wand 104 verhakt, verlagerbar ist.

Die Verriegelungsvorrichtung 1 umfasst weiter ein Gehäuse 6, an dem das Verriegelungsmittel 2 und das Betätigungsmittel 4 gelagert sind. Die Lagerung erfolgt dabei derart, dass das Betätigungsmittel 4 bei einer Schließbetätigung über eine unmittelbare Interaktion mit einem Gegenlagerelement und insbesondere dem Gehäuse 6 mittelbar eine Verlagerung des Verriegelungsmittels 2 von der geöffneten Stellung (siehe insbesondere Fig. 1) in die geschlossene Stellung (siehe insbesondere Fig. 2) bewirkt.

Das Verriegelungsmittel 2 und das Betätigungsmittel 4 sind dabei derart gelagert, dass das Betätigungsmittel 4 bei einer Schließbetätigung über die unmittelbare Interaktion mit dem Gegenlager bzw. dem Gehäuse 6 unmittelbar eine Translation und mittelbar eine Rotation des Verriegelungsmittels 2 von der geöffneten Stellung in die geschlossene Stellung bewirkt.

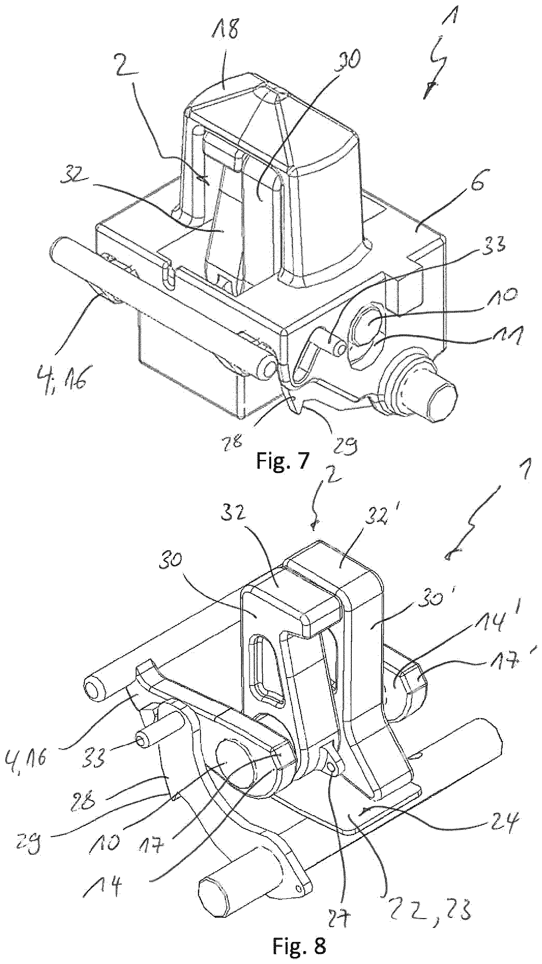

Wie insbesondere in Fig. 8 ersichtlich, umfasst das Verriegelungsmittel bei dieser Ausführungsform zwei Verriegelungsarme 30, die verschwenkbar auf einer im gemeinsamen Lagerelement 10 und insbesondere einem Lagerbolzen 10 gelagert sind. Die Verriegelungsarme 30 weisen Verriegelungsfortsätze 32 auf, über die sie sich in der Schließstellung mit der Wand 104 des Eckbeschlages 100 verhaken. Selbstverständlich sind hier auch sämtliche andere Verriegelungsmechanismen anwendbar, beispielsweise Eingreifen, Verrasten, Pressen etc.

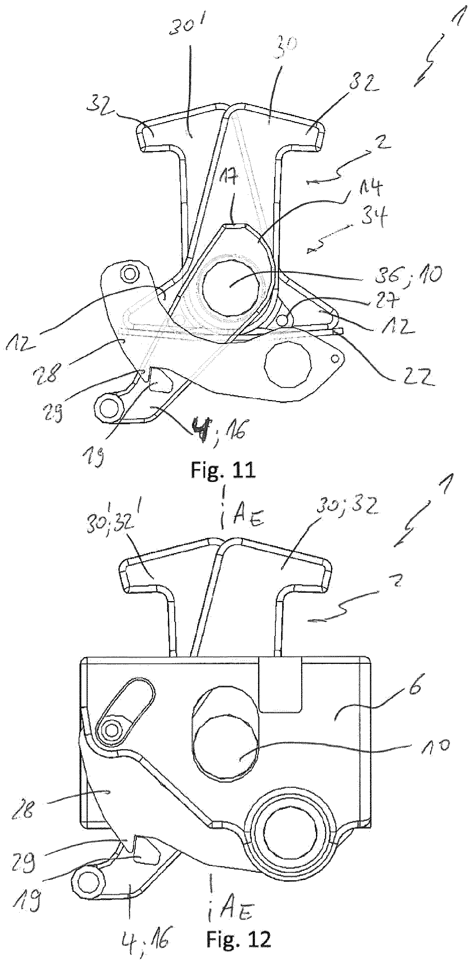

Im Detail sind die Verriegelungsarme 30 des Verriegelungsmittels 2 gegenläufig auf dem gemeinsamen Lagerelement 10 bzw. dem Lagerbolzen 10 angeordnet, wie dies im Folgenden noch im Detail beschrieben wird. Sie bilden vorzugsweise einen Scherenmechanismus 34 (siehe Fig. 11), wobei sie insbesondere im Kreuzungspunkt 36 der Verriegelungsarme 30 auf dem gemeinsamen Lagerelement 10 gelagert sind .

Das Verriegelungsmittel 2 und hier jeder Verriegelungsarm 30 weisen vorzugsweise ein Kipphebelelement 12 oder einen dergleichen Rotationsaktuator derart auf, dass das Verriegelungsmittel 2 bzw. die jeweiligen Verriegelungsarme 30 bei einer Translation in eine Rotation gedrängt wird/werden, wobei das Kipphebelelement 12 des Verriegelungsmittels 2 mit einem Gegenlagerelement 22 am Gehäuse 6 in Kraftkopplung steht. Die Kipphebelelemente 12 an den jeweiligen Verriegelungsarmen 30 sind integral mit den Verriegelungsarmen ausgebildet und insbesondere als Kipphebelfortsätze geformt, die bei einer Translation des Verriegelungsmittels 2 in Richtung der Einführachse A_{E} am Gegenlagerelement 22 entlanggleiten. Durch dieses Entlanggleiten wird die translatorische Bewegung des Verriegelungsmittels 2 (hier in Vertikalrichtung) in eine Rotation der Verriegelungsarme 30 umgelenkt. Wie beim Übergang von Fig. 1 auf Fig. 2 erkennbar, erfolgt also die Verriegelung durch eine Kombination einer translatorischen Bewegung, die eine Pressung des Eckbeschlages 100 in Vertikalrichtung (hier in Richtung der Achse A_{E}) zur Folge hat und einer Rotation, die ein Verhaken bzw. Hintergreifen der Verriegelungsfortsätze 32 bzw. der Verriegelungsarme 30 mit der Wand 104 zur Folge hat.

Im Detail ist erkennbar, dass aufgrund dieser Anordnung und der resultierenden translatorischen und rotatorischen Bewegung eine Verriegelungsvorrichtung geschaffen wird, die trotz sehr geringer Bauteilhöhe eine zuverlässige Verriegelung eines Eckbeschlages ermöglicht.

Optional ist das Gegenlagerelement 22 ein Gleitlagerelement 23 (sieh Fig. 3 und Fig. 8), das - wie hier dargestellt - insbesondere eine gebogene Gleitlagerfläche 24 aufweist. Der Vorteil einer derartigen Ausbildung ist die Steuerung der Schließbewegung der Verriegelungsarme 30, da aufgrund der gebogenen Gleitlagerfläche direkt Einfluss auf die Schließgeschwindigkeit genommen werden kann. So kommt es mit zunehmender Krümmung der Gleitlagerfläche zu einer immer schnelleren Bewegung der Verriegelungsarme, was bei der Ausführung zur Folge hat, dass zum Anfang der Verriegelung eine sehr langsame Bewegung und zum Ende der Verriegelung eine sehr schnelle Verriegelung erfolgt.

Darüber hinaus ist es möglich, das Gegenlagerelement 22 elastisch zu lagern und/oder elastisch auszubilden und insbesondere als eine Blattfeder oder dergleichen Federelement auszubilden. Auf diese Weise kann die Verriegelungsvorrichtung mit einem ausreichenden Spiel zur zuverlässigen Arretierung und darüber hinaus mit einer Sicherungsfunktion zum Schutz der Verriegelungsarme vor einwirkender Belastung, beispielsweise durch anschlagende Container, versehen werden.

In den Figuren ist ersichtlich, dass das Betätigungsmittel 4 und das Verriegelungsmittel 2 gemeinsam auf dem gemeinsamen Lagerelement 10 bzw. dem gemeinsamen Lagerbolzen 10 am Gehäuse 6 gelagert sind. Dazu weist das Gehäuse hier beispielsweise ein Langloch 11 oder dergleichen Gleitlager auf. Hier sind sämtliche aus de Stand der Technik bekannten Lagermöglichkeiten anwendbar. Relevant ist, dass der Lagerbolzen vorzugsweise im Gehäuse 6 so gelagert ist, dass durch das Betätigungsmittel 4 eine zuverlässige Translation, hier in Richtung der Einführachse A_{E} bewirkt wird.

Es sei erwähnt, dass das Betätigungsmittel 4 und das Verriegelungsmittel 2 zwar auf dem gemeinsamen Lagerelement 10 gelagert sind, jedoch nicht miteinander in einer Rotationskraftkopplung stehen. Das bedeutet, dass unter Ausschluss anderer Bauteile, keine Kraftkopplung in Rotationsrichtung zwischen dem Betätigungselement 4 und dem Verriegelungsmittel 2 bzw. dessen Verriegelungsarmen 30 besteht. Die Rotation der Verriegelungsarme 30 wird ausschließlich durch die Translation des gemeinsamen Lagerelementes 10 und die Interaktion mit dem Gegenlagerelement 22 bewirkt.

Das Betätigungsmittel 4 umfasst hier ein manuell betätigbares, insbesondere verschwenkbar gelagertes Hebelelement 16, das ebenfalls drehbar am gemeinsamen Lagerelement bzw. bolzen 10 gelagert ist. Das Betätigungsmittel 4 weist wenigstens ein Kipphebelelement 14 oder ein dergleichen Rotationsaktuator derart auf, dass es bei einer Rotation in eine Translation gedrängt wird. Wie in Fig. 1 dargestellt, greift dazu das Kipphebelelement 14 des Betätigungsmittels 4 bzw. des Hebelelements 16 an einem Gegenlagerelement 15 und insbesondere an der Innenseite 15 des Gehäuses 6 derart an, dass bei einer Rotation des Betätigungsmittels 4 das Betätigungsmittel 4 samt des gemeinsamen Lagerelementes 10 in Richtung der Einführachse A_{E} verschoben wird. Diese Translation verursacht, wie bereits erwähnt, eine Rotation des Verriegelungsmittels 2. Vorzugsweise weist das Betätigungsmittel 4 an seinem Kipphebelelement 14 einen Totpunktbereich 17 derart auf, dass beim Anlegen des Totpunktbereiches 17 am Gegenlagerelement 15 das Betätigungsmittel 4 einen stabilen Zustand einnimmt, aus dem es nur unter Aufbringung einer erhöhten Rotationskraft, einwirkend auf das Betätigungsmittel 4 bzw. hier den Betätigungshebel 16 entfernt werden kann. Dies führt zu einer Lagesicherung der Verriegelungsvorrichtung in der geschlossenen Stellung. Natürlich ist eine solche Totpunktanordnung 15 auch an jeder anderen Position des Kipphebelelementes 14 denkbar.

Das Verriegelungsmittel weist hier ein Vorspannmittel 26 auf, das das Verriegelungsmittel 2 und insbesondere dessen Verriegelungsarme 30 in die geöffnete Stellung drängt. Dieses Vorspannmittel 26 weist hier zwei Zugkraftelemente und insbesondere Federkraftelemente auf, die jeweils an einem Vorspannfortsatz 27 des Verriegelungsmittels 2 bzw. des Verriegelungsarms 30 angeordnet sind. Hier sind natürlich auch andere Vorspannmittel anwendbar.

Bei dieser Ausführungsform umfasst das Verriegelungsmittel 2 darüber hinaus ein Sicherungsmittel 28, das das Verriegelungsmittel 2 lösbar in der geschlossenen Stellung fixiert. Bei dieser Ausführungsform ist das Sicherungsmittel 28 als ein Schwenkhebel ausgeführt, der in der geschlossenen Stellung mit einem Rastelement 29 an einem Gegenrastelement 19, vorgesehen am Betätigungsmittel 4 bzw. dessen Hebelelement 16 eingreift. Das Sicherungsmittel 28 wird dabei mittels eines Kraftelementes 25 in seiner Lage fixiert. Gegen die Wirkung des Kraftelementes 25, das hier als Zugfederelement 25 ausgebildet ist, kann das Rastelement 29 aus seiner Rastverbindung mit dem Rastgegenelement 19 befreit und so eine Fixierung des Betätigungsmittels 4 aufgehoben werden. Bei dieser Ausführungsform ist das Sicherungsmittel dabei derart ausgebildet, dass es gegen das Betätigungsmittel 4 so vorgespannt ist, dass es bei Erreichen eines Rastzustandes, hier die Stellung des Betätigungsmittels 4 in der geschlossenen Stellung, automatisch seine Verriegelungsstellung einnimmt. Dazu gleitet das Sicherungsmittel 28 mit einem Gleitelement 31, hier ein Stirnseitenabschnitt des Sicherungsmittels 28 am Rastgegenelement 19 des Betätigungsmittels 14 entlang.

Wie insbesondere in den Fig. 7 und 8 dargestellt, umfasst das Sicherungsmittel 28 einen Aktivierungshebel 33, der derart aus dem Gehäuse 6 hervorragt, dass er von der Außenseite des Gehäuses 6 und insbesondere durch einen Benutzer der Verriegelungsvorrichtung sichtbar und betätigbar ist. Selbiges gilt für das Betätigungsmittel 4 bzw. das Hebelelement 16, das ebenfalls derart aus dem Gehäuse 6 hervorragt, dass es von einem Benutzer optisch wahrnehmbar und darüber hinaus betätigbar ist. Insbesondere die optische Wahrnehmbarkeit ermöglicht so die Kontrolle des Verriegelungs- bzw. Entriegelungszustandes. Diese Kontrollmöglichkeit wird sowohl durch das Betätigungsmittel 4 als auch durch das Sicherungsmittel 28 geboten.

Wie insbesondere in den Fig. 1, 2, 7 und 10 dargestellt, umfasst das Gehäuse 6 ein Leitelement 18, das als Schutzelement für das Verriegelungsmittel 2 fungiert. Das Leitelement 8 umgibt dabei das Verriegelungsmittel 2 bzw. die Verriegelungsarme 30 derart und insbesondere in einem Topfbereich der Verriegelungsvorrichtung, dass eine Beschädigung durch einen Container oder andere von außen einwirkende Lasten insbesondere in der geöffneten Stellung verhindert wird.

Obwohl illustrative Ausführungsformen der vorliegenden Erfindung oben beschrieben wurden, teils unter Bezugnahme auf die beiliegenden Zeichnungen, versteht es sich, dass die Erfindung nicht auf diese Ausführungsformen beschränkt ist. Varianten zu den offenbarten Ausführungsformen können vom Fachmann in der Ausübung der beanspruchten Erfindung anhand Studiums der Zeichnungen, der Offenbarung und der angehängten Ansprüche verstanden und ausgeführt werden.

In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch immer in den Rahmen der betreffenden Definition fallen würden.

Es ist offensichtlich, dass verschiedene Modifikationen und Änderungen an obigen Offenbarungen vorgenommen werden können ohne vom breiteren Gedanken und Umfang der Erfindung, wie sie in den angehängten Ansprüchen beschrieben ist, abzuweichen. Es sind zudem auch andere Modifizierungen, Varianten und Alternativen möglich. Dementsprechend sind die Spezifikationen, Zeichnungen und Beispiele in einem illustrativen statt einem einschränkenden Sinn zu betrachten.

In den Ansprüchen sind Referenzzeichen zwischen Klammern nicht dahingehend auszulegend, dass sie den Anspruch eingrenzen. Das Wort 'umfassend' schließt die Anwesenheit anderer Merkmale oder Schritte als die in einem Anspruch ausgeführten nicht aus. Außerdem sind die Wörter 'ein', 'eine' und 'eines' nicht als einschränkend auf 'nur ein' aufzufassen sondern werden verwendet, um 'mindestens ein' zu bedeuten und schließen eine Mehrheit nicht aus. Die reine Tatsache, dass bestimmte Maße in voneinander verschiedenen Ansprüchen angegeben sind, bedeutet nicht, dass eine Kombination dieser Maße nicht vorteilhaft verwendet werden kann.

Verweise in dieser Spezifikation auf "1 Ausführungsform" oder "eine Ausführungsform" bedeuten, dass ein bestimmtes Merkmal, eine bestimmte Struktur oder eine bestimmte Eigenschaft, beschrieben in Zusammenhang mit der Ausführungsform, in "mindestens eine" Ausführungsform der vorliegenden Erfindung einbezogen ist. Es verweisen also Sätze entsprechend "in 1 Ausführungsform" oder "in einer Ausführungsform" an verschiedenen Stellen in dieser Spezifikation nicht zwangsläufig auf ein und dieselbe Ausführungsform. Ferner ist festzuhalten, dass bestimmte Merkmale, Strukturen oder Eigenschaften von einer oder mehreren Ausführungsformen in jeder geeigneten Weise kombiniert werden können, um neue, nicht ausdrücklich beschriebene Ausführungsformen zu bilden.

### Bezugszeichenliste

- 1: Verriegelungsvorrichtung
- 2: Verriegelungsmittel
- 4: Betätigungsmittel
- 6: Gehäuse
- 8: Leitelement
- 10: Gemeinsames Lagerelement bzw. Lagerbolzen
- 11: Langloch
- 12: Kipphebelelement von 2
- 14: Kipphebelelement von 4
- 15: Gegenlagerelement bzw. Innenseite des Gehäuses 6
- 16: Hebelelement
- 17: Totpunktbereich
- 19: Gegenrastelement
- 22: Gegenlagerelement
- 23: Gleitlagerelement
- 24: Gleitlagerfläche
- 25: Kraftelement
- 26: Vorspannmittel
- 27: Vorspannfortsatz
- 28: Sicherungsmittel
- 29: Rastelement
- 30: Verriegelungsarm
- 31: Gleitelement
- 32: Verriegelungsfortsatz
- 34: Scherenmechanismus
- 36: Kreuzungspunkt
- 100: Eckbeschlag
- 102: Öffnung
- 104: Wand
- A_{E}: Einführachse

## Patentansprüche

1. Verriegelungsvorrichtung zur Verriegelung eines, insbesondere nach ISO standardisierten, Eckbeschlages (100) eines Frachtcontainers, umfassend ein Verriegelungsmittel (2), das mittels eines Betätigungsmittels (4) zwischen einer geöffneten Stellung, in der es unbehindert entlang einer Einführachse A_{E} eine Öffnung (102) des Eckbeschlages (100) passieren kann, und
einer geschlossenen Stellung, in der es sich relativ zu dieser Öffnung arretiert und insbesondere hinter einer die Öffnung (102) wenigstens teilweise umgebenden Wand (104) verhakt, verlagerbar ist, und
ein Gehäuse (6), wobei das Betätigungsmittel (4) wenigstens ein manuell betätigbares Hebelelement (16) umfasst,
**dadurch gekennzeichnet, dass**
das Verriegelungsmittel (2) und das Betätigungsmittel (4) derart am Gehäuse (6) gelagert sind, dass
das Betätigungsmittel (4) bei einer manuellen Schließbetätigung über eine unmittelbare Interaktion mit dem Gehäuse (6) mittelbar eine Verlagerung des Verriegelungsmittels (2) von der geöffneten Stellung in die geschlossene Stellung bewirkt und
unmittelbar eine Translation und mittelbar eine Rotation des Verriegelungsmittels (2) von der geöffneten Stellung in die geschlossene Stellung bewirkt,
wobei das Verriegelungsmittel (2) wenigstens ein Kipphebelelement (12) oder dergleichen Rotationsaktuator derart umfasst, dass es bei einer Translation in eine Rotation gedrängt wird.

2. Verriegelungsvorrichtung nach Anspruch 1,
**dadurch gekennzeichnet, dass**
das Kipphebelelement (12) des Verriegelungsmittels (2) mit wenigstens einem Gegenlagerelement (22) am Gehäuse (6) in Kraftkopplung steht.

3. Verriegelungsvorrichtung nach einem der vorhergehenden Ansprüche, insbesondere Anspruch 2,
**dadurch gekennzeichnet, dass**
das Gegenlagerelement (22) wenigstens ein gebogenes Gleitlagerelement (23) aufweist.

4. Verriegelungsvorrichtung nach einem der vorangegangenen Ansprüche,
**dadurch gekennzeichnet, dass**
das Betätigungsmittel (4) und das Verriegelungsmittel (2) auf wenigstens einem gemeinsamen Lagerelement (10) am Gehäuse (6) gelagert sind.

5. Verriegelungsvorrichtung nach Anspruch 4,
**dadurch gekennzeichnet, dass**
das gemeinsame Lagerelement (10) entlang der Einführachse A_{E} verschiebbar am Gehäuse (6) gelagert ist.

6. Verriegelungsvorrichtung nach einem der vorangegangenen Ansprüche,
**dadurch gekennzeichnet, dass**
das Betätigungsmittel (4) wenigstens ein wenigstens manuell betätigbares, insbesondere verschwenkbar gelagertes Hebelelement (16) umfasst.

7. Verriegelungsvorrichtung nach einem der vorangegangenen Ansprüche,
**dadurch gekennzeichnet, dass**
das Betätigungsmittel (4) wenigstens ein Kipphebelelement (14) oder dergleichen Rotationsaktuator derart umfasst, dass es bei einer Rotation in eine Translation gedrängt wird.

8. Verriegelungsvorrichtung nach einem der vorangegangenen Ansprüche,
**dadurch gekennzeichnet, dass**
das Verriegelungsmittel (2) wenigstens einen verschwenkbar gelagerten Verriegelungsarm (30) umfasst der wenigstens einen Verriegelungsfortsatz (32) derart aufweist, dass er sich in der geschlossenen Stellung hinter der die Öffnung (102) wenigstens teilweise umgebenden Wand (104) verhakt.

9. Verriegelungsvorrichtung nach einem der vorangegangenen Ansprüche,
**dadurch gekennzeichnet, dass**
wenigstens zwei Verriegelungsarme (30) des Verriegelungsmittels (2) auf dem gemeinsamen Lagerelement (10) gelagert sind.

10. Verriegelungsvorrichtung nach einem der vorangegangenen Ansprüche,
**dadurch gekennzeichnet, dass**
wenigstens zwei Verriegelungsarme (30) des Verriegelungsmittels (2) als Scherenmechanismus (34) angeordnet sind.

11. Verriegelungsvorrichtung nach einem der vorangegangenen Ansprüche,
**dadurch gekennzeichnet, dass**
das Verriegelungsmittel (2) wenigstens ein Vorspannmittel (26) umfasst, das das Verriegelungsmittel (2) in die geöffnete Stellung drängt.

12. Verriegelungsvorrichtung nach einem der vorangegangenen Ansprüche,
**dadurch gekennzeichnet, dass**
das Verriegelungsmittel (2) wenigstens ein Sicherungsmittel (28) umfasst, das das Verriegelungsmittel (2) lösbar in der geschlossenen Stellung fixiert.

13. Verriegelungsvorrichtung nach einem der vorangegangenen Ansprüche,
**dadurch gekennzeichnet, dass**
die Verriegelungsvorrichtung (1) lösbar an einem Fahrzeug oder dergleichen Befestigungsort für einen Container befestigbar ist.

14. Fahrzeug oder dergleichen Befestigungsort für einen Container, wobei wenigstens eine Verriegelungsvorrichtung (1) gemäß einem der vorgenannten Ansprüche vorgesehen ist.

## Claims

1. Locking device for locking an, in particular ISO-standardised, corner fitting (100) of a shipping container, comprising a locking means (2) which can be moved, by means of an operating means (4), between an opened position in which it can pass without hindrance along an insertion axis Ae of an opening (102) of the corner fitting (100) and
a closed position in which it is locked relative to this opening and in particular hooks behind a wall (104) at least partially surrounding the opening (102), and
a housing (6), said operating means (4) comprising at least one manually operable lever element (16),
**characterised in that**
the locking means (2) and the operating means (4) are mounted on the housing (6) such that
on a manual closing operation taking place, the operating means (4) causes, indirectly, via a direct interaction with the housing (6), a displacement of the locking means (2) from the opened position into the closed position and causes, directly, a translation and, indirectly, a rotation of the locking means (2) from the opened position into the closed position, wherein the locking means (2) comprises at least one rocker lever element (12) or similar rotary actuator such that, on a translation taking place, it is forced into a rotation.

2. Locking device according to Claim 1,
**characterised in that**
the rocker lever element (12) of the locking means (2) is force-coupled with at least one counter-bearing element (22) on the housing (6).

3. Locking device according to any one of the preceding claims, in particular Claim 2,
**characterised in that**
the counter-bearing element (22) has at least one curved slide bearing element (23).

4. Locking device according to any one of the preceding claims,
**characterised in that**
the operating means (4) and the locking means (2) are mounted on at least one common bearing element (10) on the housing (6).

5. Locking device according to Claim 4,
**characterised in that**
the common bearing element (10) is mounted on the housing (6) so as to be displaceable along the insertion axis A_{E}.

6. Locking device according to any one of the preceding claims,
**characterised in that**
the operating means (4) comprises at least one at least manually operable, in particular swivelably-mounted lever element (16).

7. Locking device according to any one of the preceding claims,
**characterised in that**
the operating means (4) comprises at least one rocker lever element (14) or similar rotary actuator such that, on a rotation taking place, it is forced into a translation.

8. Locking device according to any one of the preceding claims,
**characterised in that**
the locking means (2) comprises at least one swivelably-mounted locking arm (30) which has at least one locking extension (32) such that, in the closed position, it hooks behind the wall (104) at least partially surrounding the opening (102).

9. Locking device according to any one of the preceding claims,
**characterised in that**
at least two locking arms (30) of the locking means (2) are mounted on the common bearing element (10).

10. Locking device according to any one of the preceding claims,
**characterised in that**
at least two locking arms (30) of the locking means (2) are arranged in the form of a shear mechanism (34).

11. Locking device according to any one of the preceding claims,
**characterised in that**
the locking means (2) comprises at least one preloading means (26) which forces the locking means (2) into the opened position.

12. Locking device according to any one of the preceding claims,
**characterised in that**
the locking means (2) comprises at least one securing means (28) which fixes the locking means (2), releasably, in the closed position.

13. Locking device according to any one of the preceding claims,
**characterised in that**
the locking device (1) can be fastened detachably to a vehicle or similar fastening location for a container.

14. Vehicle or similar fastening location for a container, wherein at least one locking device (1) according to any one of the aforementioned claims is provided.

## Revendications

1. Dispositif de verrouillage pour verrouiller une ferrure d'angle (100), en particulier normalisée ISO, d'un conteneur de fret, comprenant des moyens de verrouillage (2) qui, par l'intermédiaire de moyens d'actionnement (4), peuvent être déplacés entre une position ouverte dans laquelle ils peuvent passer librement le long d'un axe d'insertion A_{E} (102) de la ferrure d'angle (100), et
une position fermée dans laquelle ils sont arrêtés par rapport à cette ouverture et en particulier accrochés derrière une paroi (104) entourant au moins partiellement l'ouverture (102), et
un boîtier (6), dans lequel les moyens d'actionnement (4) comprennent au moins un élément de levier pouvant être actionné manuellement (16),
**caractérisé en ce que**
les moyens de verrouillage (2) et les moyens d'actionnement (4) sont montés sur le boîtier (6) de telle sorte que
les moyens d'actionnement (4), lors d'une opération de fermeture manuelle via une interaction directe avec le boîtier (6), entraînent indirectement un déplacement des moyens de verrouillage (2) de la position ouverte à la position fermée, et
entraînent directement une translation et indirectement une rotation des moyens de verrouillage (2) de la position ouverte à la position fermée,
dans lequel les moyens de verrouillage (2) comprennent au moins un élément de levier basculant (12) ou un actionneur rotatif similaire afin d'être poussés en rotation via une translation.

2. Dispositif de verrouillage selon la revendication 1,
**caractérisé en ce que**
l'élément de levier basculant (12) des moyens de verrouillage (2) est en liaison de force avec au moins un élément de palier antagoniste (22) au niveau du boîtier (6).

3. Dispositif de verrouillage selon l'une des revendications précédentes, en particulier la revendication 2,
**caractérisé en ce que**
l'élément de palier antagoniste (22) présente au moins un élément de palier lisse incurvé (23).

4. Dispositif de verrouillage selon l'une des revendications précédentes,
**caractérisé en ce que**
les moyens d'actionnement (4) et les moyens de verrouillage (2) sont montés sur au moins un élément de palier commun (10) au niveau du boîtier (6).

5. Dispositif de verrouillage selon la revendication 4,
**caractérisé en ce que**
l'élément de palier commun (10) est monté le long de l'axe d'insertion A_{E} pouvant être déplacé au niveau du boîtier (6).

6. Dispositif de verrouillage selon l'une des revendications précédentes,
**caractérisé en ce que**
les moyens d'actionnement (4) comprennent au moins un élément de levier (16) pouvant être actionné manuellement, en particulier monté de manière pivotante.

7. Dispositif de verrouillage selon l'une des revendications précédentes,
**caractérisé en ce que**
les moyens d'actionnement (4) comprennent au moins un élément de levier basculant (14) ou un actionneur rotatif similaire, de telle sorte qu'ils sont poussés dans une translation via une rotation.

8. Dispositif de verrouillage selon l'une des revendications précédentes,
**caractérisé en ce que**
les moyens de verrouillage (2) comprennent au moins un bras de verrouillage (30) monté de manière pivotante, comportant au moins une extension de verrouillage (32), de sorte qu'ils s'accrochent dans la position fermée derrière une paroi (104) entourant au moins partiellement l'ouverture (102).

9. Dispositif de verrouillage selon l'une des revendications précédentes,
**caractérisé en ce que**
au moins deux bras de verrouillage (30) des moyens de verrouillage (2) sont montés sur l'élément de palier commun (10).

10. Dispositif de verrouillage selon l'une des revendications précédentes,
**caractérisé en ce que**
au moins deux bras de verrouillage (30) des moyens de verrouillage (2) sont agencés sous la forme d'un mécanisme de ciseaux (34).

11. Dispositif de verrouillage selon l'une des revendications précédentes,
**caractérisé en ce que**
les moyens de verrouillage (2) comprennent au moins des moyens de sollicitation (26) qui sollicitent les moyens de verrouillage (2) vers la position ouverte.

12. Dispositif de verrouillage selon l'une des revendications précédentes,
**caractérisé en ce que**
les moyens de verrouillage (2) comprennent au moins des moyens de fixation (28), qui fixent les moyens de verrouillage (2) de manière amovible dans la position fermée.

13. Dispositif de verrouillage selon l'une des revendications précédentes,
**caractérisé en ce que**
le dispositif de verrouillage (1) peut être fixé de manière amovible sur un véhicule, ou un emplacement de fixation similaire pour un conteneur.

14. Véhicule ou emplacement de fixation similaire pour un conteneur, dans lequel au moins un dispositif de verrouillage (1) selon l'une des revendications précédentes est prévu.
